# EUROPÄISCHE PATENTANMELDUNG

(11) **EP 2 299 572 A1**
(43) Veröffentlichungstag der Anmeldung: **23.03.2011**
(21) Anmeldenummer: 09170867.7
(22) Anmeldetag: 21.09.2009
(51) Int. Cl.: H02M 1/36, H02M 3/335, H02M 7/48

(54) **Aufstarten eines DC/DC-Wandlers mit Hochfrequenztransformator**

(71) Anmelder: SMA Solar Technology AG, 34266 Niestetal (DE)
(72) Erfinder: Victor, Matthias, Dr., 34266, Niestetal (DE); Seel, Christian, Dipl.-Ing., 34127, Kassel (DE); Bethke, Lars, Dipl.-Ing., 37085, Göttingen (DE)
(74) Vertreter: Rehberg Hüppe + Partner

(57) **Zusammenfassung**

Zum Aufstarten eines DC/DC-Wandlers (1) mit Hochfrequenztransformator (2), dessen Primärwicklung (3) über eine getaktete Schalter (V1, V2) aufweisende Wechselrichterbrücke (7) aus einem eingangsseitigen Gleichspannungszwischenkreis (5) gespeist wird und dessen Sekundärwicklung (4) über eine Gleichrichterbrücke (15) einen ausgangsseitigen Gleichspannungszwischenkreis (16) lädt, werden die Schalter (V1, V2) der Wechselrichterbrücke (7) beim Aufstarten zum Aufladen des ausgangsseitigen Gleichspannungszwischenkreises (16) mit einer stufenweise festen Pulsbreite von nicht mehr als 5 % getaktet.

## Beschreibung

### TECHNISCHES GEBIET DER ERFINDUNG

Die Erfindung bezieht sich auf ein Verfahren zum Aufstarten eines DC/DC-Wandlers mit Hochfrequenztransformator, das die Schritte des Oberbegriffs des unabhängigen Patentanspruchs 1 aufweist, sowie auf einen DC/DC-Wandler mit Hochfrequenztransformator, der die Merkmale des Oberbegriffs des unabhängigen Patentanspruchs 11 aufweist.

Insbesondere ist die vorliegende Erfindung zum Einsatz bei einem Wechselrichter zur Einspeisung von elektrischer Energie von einer Gleichstromquelle in ein Wechselstromnetz vorgesehen, wobei der Hochfrequenztransformator eine galvanische Entkopplung der Eingangsseite von der Ausgangsseite des Wechselrichters bereitstellt und zugleich die Eingangsgleichspannung systematisch erhöhen oder erniedrigen kann. Ganz insbesondere ist die vorliegende Erfindung für die Anwendung bei Wechselrichtern vorgesehen, mit denen elektrische Energie von Photovoltaikmodulen in ein Wechselstromnetz eingespeist wird. Die Erfindung ist aber auch auf anderen technischen Gebieten einsetzbar.

### STAND DER TECHNIK

Wenn sich der eingangsseitige Gleichspannungszwischenkreis eines DC/DC-Wandlers mit Hochfrequenztransformator z. B. mit dem Ansteigen der Ausgangsspannung einer angeschlossenen Photovoltaik auflädt, wozu in aller Regel das Aufladen mindestens einer Pufferkapazität in diesem Gleichspannungszwischenkreis zählt, hat dies auf den Ladungszustand des ausgangsseitigen Gleichspannungszwischenkreises hinter dem Hochfrequenztransformator keinen Einfluss. Wenn dann die Schalter einer Wechselrichterbrücke, die die Primärseite des Hochfrequenztransformators aus dem eingangsseitigen Zwischenkreis speist, erstmalig wechselweise geschlossen werden, fließen mangels Gegenspannung in dem ausgangsseitigen Gleichspannungszwischenkreis sehr hohe Ströme, die leicht ein zulässiges Maß überschreiten, über dem die Integrität insbesondere der Halbleiterbauteile des DC/DC-Wandlers in Frage gestellt ist. Dies gilt insbesondere dann, wenn die Schalter der Wechselrichterbrücke mit einer Frequenz von der Größenordnung nahe der Resonanzfrequenz eines die Primärseite des Hochfrequenztransformators umfassenden Resonanzkreises getaktet werden, um die passiven Verluste im Bereich des DC/DC-Wandlers möglichst klein zu halten. In diesem Fall sind die Ströme, die beim Takten der Schalter der Wechselrichterbrücke während des Aufstartens des DC/DC-Wandlers fließen, nahezu ungedämpft. Eine gezielte passive Dämpfung dieser Ströme würde umgekehrt die Verluste im normalen Betrieb des DC/DC-Wandlers erhöhen.

Zur Lösung dieser Problematik ist es bekannt, die Schalter der Wechselrichterbrücke beim Aufstarten eines DC/DC-Wandlers mit Hochfrequenztransformator mit einer gegenüber der Frequenz, mit der sie im Normalbetrieb des DC/DC-Wandlers getaktet werden, deutlich erhöhten Frequenz zu takten. Diese Vorgehensweise und ein hierfür hergerichteter DC/DC-Wandler mit Hochfrequenztransformator entsprechen den Oberbegriffen der unabhängigen Patentansprüche 1 und 11. Dabei ist die erhöhte Frequenz von der Spannung abhängig, die in dem eingangsseitigen Gleichspannungszwischenkreis vorliegt. Je höher diese Spannung ist, desto größer ist die Frequenz, mit der die Schalter der Wechselrichterbrücke beim Aufstarten getaktet werden. Die Erhöhung der Frequenz bei gleichbleibender prozentualer Öffnungsdauer der Schalter hat zur Folge, dass die Ströme jeweils nur sehr kurze Zeit ansteigen können, bevor sie durch Umkehrung der Schalterstellungen in ihrer Richtung umgekehrt werden. So wirkt die Frequenzerhöhung beim Takten der Schalter der Wechselrichterbrücke während des Aufstartens unmittelbar strombegrenzend. Diese Maßnahme reicht jedoch nicht aus, wenn der ausgangsseitige Gleichspannungszwischenkreis des DC/DC-Wandlers überhaupt nicht geladen ist. Deshalb weist der Bordnetztransformator bei dem hier beschriebenen Stand der Technik eine zusätzliche Wicklung auf, mit der eine Voraufladung des ausgangsseitigen Gleichspannungszwischenkreises auf 150 V erfolgt, um die Spannungsdifferenz zwischen dem eingangsseitigen und dem ausgangsseitigen Gleichspannungszwischenkreis von vornherein zu reduzieren. Sowohl die zusätzliche Frequenz zum Takten der Schalter der Wechselrichterbrücke als auch insbesondere die zusätzliche Wicklung des Bordnetztransformators bedeuten einen erheblichen Aufwand, um beim Aufstarten des DC/DC-Wandlers mit Hochfrequenztransformator die fließenden Ströme in sinnvoller Weise zu begrenzen.

### AUFGABE DER ERFINDUNG

Der Erfindung liegt die Aufgabe zugrunde, ein Verfahren mit den Schritten des Oberbegriffs des unabhängigen Patentanspruchs 1 und eine Vorrichtung mit den Merkmalen des Oberbegriffs des unabhängigen Patentanspruchs 11 aufzuzeigen, bei denen die beim Aufstarten maximal fließenden Ströme zuverlässig begrenzt werden, ohne dass hierfür aufwändige apparative Voraussetzungen geschaffen werden müssen.

### LÖSUNG

Die Aufgabe wird erfindungsgemäß durch ein Verfahren zum Aufstarten eines DC/DC-Wandlers mit Hochfrequenztransformator, das die Schritte des Patentanspruchs 1 aufweist, und durch einen DC/DC-Wandler mit Hochfrequenztransformator, der die Merkmale des unabhängigen Patentanspruchs 11 aufweist, gelöst. Bevorzugte Ausführungsformen des neuen Verfahrens und des neuen DC/DC-Wandlers sind in den abhängigen Patentansprüchen beschrieben.

### BESCHREIBUNG DER ERFINDUNG

Bei der vorliegenden Erfindung werden die Schalter der Wechselrichterbrücke zum Aufladen des ausgangsseitigen Gleichspannungszwischenkreises des DC/DC-Wandlers mit einer stufenweise festen Pulsbreite von nicht mehr als 5 % getaktet. Statt die Frequenz des Taktens der Schalter für das Aufstarten zu erhöhen, geht die Erfindung den Weg, die Pulsbreite herabzusetzen. Dabei erfolgt jedoch keine Pulsbreitenmodulation, um den Strom auf einen bestimmten Wert einzuregeln, da eine solche ansonsten übliche Pulsbreitenmodulation unter den besonderen Umständen während des Aufstartens äußerst aufwändig, wenn überhaupt zu realisieren wäre. Vielmehr werden empirisch ermittelte Pulsbreiten eingestellt, mit denen der Strom während des Aufstartens trotz großer Spannungsdifferenz zwischen der Primär- und Sekundärseite des Hochfrequenztransformators zuverlässig begrenzt werden kann. Dabei kann die Pulsbreite während des Aufstartens zwar sukzessive erhöht werden; dies erfolgt aber nicht kontinuierlich, sondern stufenweise von einer festen Pulsbreite zur nächstgrößeren festen Pulsbreite. Dass die vorliegende Erfindung dabei nicht nur theoretisch eine Reduzierung der beim Aufladen fließenden Ströme bewirkt, sondern auch praktisch funktioniert, ist angesichts der Tatsache, dass die Schalter der Wechselrichterbrücke eines DC/DC-Wandlers mit Hochfrequenztransformator üblicherweise für eine nahe bei 50 % liegende Pulsbreite optimiert sind, durchaus überraschend. Dies gilt insbesondere bei der bevorzugten Ausführungsform der vorliegenden Erfindung, bei der die stufenweise feste Pulsbreite, mit der die Schalter der Wechselrichterbrücke getaktet werden, auf keiner Stufe mehr als 2 % beträgt. Diese sehr kleinen Werte der Pulsbreite können erforderlich sein, um die gewünschten Maximalströme bei sehr geringer Dämpfung des Stroms auf der Primärseite einzuhalten.

Die Erhöhung der Pulsbreite kann in zwei oder mehr, insbesondere zwei bis vier Stufen, d. h. zum Beispiel drei Stufen erfolgen, wobei zwischen jeweils zwei Stufen die Pulsbreite um etwa 50 bis 100 % erhöht werden kann. Bei der Erfindung ist aber kein festes Schema der Erhöhung der Pulsbreite zwischen den einzelnen Stufen vorgesehen. Vielmehr wird bei ihr vorzugsweise jede vorgegebene Pulsbreite aus den überhaupt nur möglichen Werten der Pulsbreite ausgewählt, bei denen durch die Taktung der Schaltung der Wechselrichterbrücke keine Störungen, beispielsweise durch Resonanzeffekte, hervorgerufen werden.

Wenn die Pulsbreite von Stufe zu Stufe erhöht wird, kann ihre Erhöhung dann auf den nächstgrößeren Wert erfolgen, wenn die Gleichspannungsdifferenz zwischen der Gleichspannung des eingangsseitigen Gleichspannungszwischenkreises und der auf den eingangsseitigen Gleichspannungszwischenkreis umgerechneten Gleichspannung des ausgangsseitigen Gleichspannungszwischenkreises einen vorgegebenen Grenzwert unterschreitet. Dabei kann die Gleichspannungsdifferenz ausschließlich zu vorgegebenen Überprüfungszeitpunkten auf das Unterschreiten dieses Grenzwerts überprüft werden. Zusätzlich kann, wenn binnen gewisser Zeit kein zu erwartender Abfall der Gleichspannungsdifferenz eintritt, das Aufstarten abgebrochen und eine Fehlermeldung ausgegeben werden.

Vorzugsweise werden die Schalter der Wechselrichterbrücke auch beim Aufstarten mit genau derselben Frequenz getaktet, mit der sie auch im Normalbetrieb des DC/DC-Wandlers getaktet werden. D. h., für das Takten der Schalter der Wechselrichterbrücke reicht ein Taktsignalausgang mit fester Taktsignalfrequenz aus. Diese Frequenz kann in einem typischen Bereich von 16 bis 96 kHz liegen und beispielsweise 48 kHz betragen.

Bei der Erfindung werden die Schalter der Wechselrichterbrücke im Normalbetrieb nach dem Aufstarten des DC/DC-Wandlers ebenfalls mit einer festen vorgegebenen Pulsbreite, hier von mindestens 40 bis knapp 50 %, getaktet.

Wenn ein stufenweises Erhöhen der Pulsbreite bei der Erfindung vorgesehen ist, wird dabei immer mit dem kleinsten Wert der Pulsbreite begonnen, unabhängig davon, ob die Sekundärseite des Hochfrequenztransformators noch oder schon eine gewisse Aufladung aufweist. Hiermit wird sichergestellt, dass auch während des Symmetrisierens der Spannungsabfälle über Kapazitäten, die auf der Primärseite des Hochfrequenztransformators zur Spannungsteilung eingesetzt werden, keine übermäßigen Ströme fließen.

Bei einem erfindungsgemäßen DC/DC-Wandler wird das neue Verfahren durch eine Steuerung für das Takten der Schalter der Wechselrichterbrücke umgesetzt. Dazu erfasst die Steuerung vorzugsweise eine Gleichspannungsdifferenz zwischen der Gleichspannung des eingangsseitigen Gleichspannungszwischenkreises und der auf den eingangsseitigen Gleichspannungszwischenkreis umgerechneten Gleichspannung des ausgangsseitigen Gleichspannungszwischenkreises.

Die Primärseite des Hochfrequenztransformators ist vorzugsweise Teil eines Resonanzkreises mit einer Resonanzfrequenz, wobei die Schalter der Wechselrichterbrücke vorzugsweise sowohl während des Aufstartens als auch im Normalbetrieb des DC/DC-Wandlers mit einer beispielsweise etwa 25 % kleineren Frequenz getaktet werden. Die Wechselrichterbrücke ist vorzugsweise eine Halbbrücke mit zwei gegenphasig getakteten Schaltern, wobei die Kommutierung des Stroms über eine parallele Brücke aus zwei Kapazitäten erfolgt, die Teil des Resonanzkreises sind.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: zeigt den prinzipiellen Aufbau eines erfindungsgemäßen DC/DC-Wandlers mit Hochfrequenztransformator und
- **Fig. 2**: skizziert die erfindungsgemäße stufenweise Aufladung des ausgangsseitigen Gleichspannungszwischenkreises des DC/DC-Wandlers gemäß Fig. 1.

### FIGURENBESCHREIBUNG

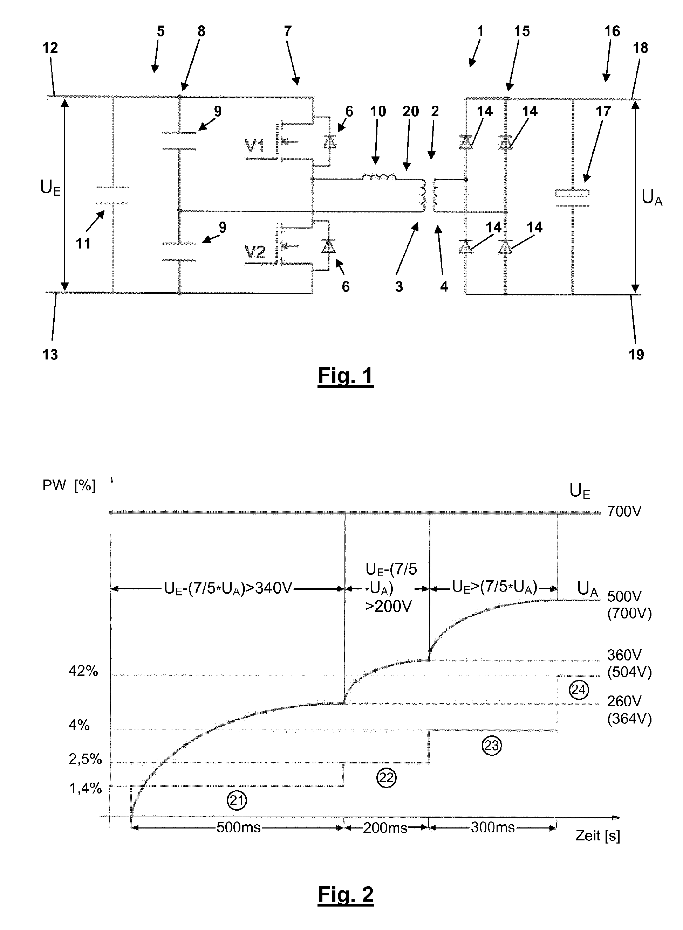

Der in **Fig. 1** gezeigte DC/DC-Wandler 1 weist einen Hochfrequenztransformator 2 mit einer Primärwicklung 3 und einer Sekundärwicklung 4 auf. Die Primärwicklung 3 wird aus einem eingangsseitigen Gleichspannungszwischenkreis 5 über zwei gegenphasig getaktete Schalter V1 und V2, denen Freilaufdioden 6 parallel geschaltet sind, mit Strom in unterschiedlicher Flussrichtung gespeist. Dabei ist einer als Halbbrücke ausgebildeten Wechselrichterbrücke 7 aus den Schaltern V1 und V2 eine Brücke 8 aus zwei Kapazitäten 9 parallel geschaltet, deren Mittelpunkt mit dem anderen Ende der Primärwicklung 3 verbunden ist. Die Kapazitäten 9 dienen zusammen mit einer Induktivität 10 zwischen dem Mittelpunkt der Brücke 7 und der Primärwicklung 3 zur Ausbildung eines Resonanzkreises 20, der eine Resonanzfrequenz aufweist, wobei die Schalter V1 und V2 mit einer etwas kleineren Frequenz gegenphasig getaktet werden. Der Gleichspannungszwischenkreis 5 weist weiterhin eine Pufferkapazität 11 auf. Diese puffert eine zwischen Eingangsleitungen 12 und 13 des Gleichspannungszwischenkreises anliegende Eingangsspannung U_{E} über Zeiträume hinweg, in denen jeweils einer der Schalter V1 und V2 geöffnet ist und entsprechend diskontinuierlich Ladung aus dem Zwischenkreis abfließt. Die Sekundärwicklung 4 des Hochfrequenztransformators 2 ist an eine aus Dioden 14 aufgebaute Gleichrichterbrücke 15 angeschlossen, die einen ausgangsseitigen Gleichspannungszwischenkreis 16 mit einer Pufferkapazität 17 auf eine Ausgangsspannung U_{A} zwischen Ausgangsleitungen 18 und 19 lädt.

Wenn die Eingangsspannung U_{E} erstmalig an den Eingangsleitungen 12 und 13 anliegt, wird zwar die Pufferkapazität 11 und werden die Kapazitäten 9 und damit der Gleichspannungszwischenkreis 5 aufgeladen, die Pufferkapazität 17 und damit der Gleichspannungszwischenkreis 16 bleibt jedoch ungeladen. Eine Aufladung des Gleichspannungszwischenkreises 16 erfolgt erst dann, wenn die Schalter V1 und V2 erstmalig gegenphasig getaktet, d. h. geschlossen werden. Wenn man jedoch die Schalter V1 und V2 bereits mit der für den späteren Normalbetrieb des Wandlers 1 üblichen Pulsbreite von nahe 50 % und mit einer Frequenz von der Größenordnung der Resonanzfrequenz des die Primärwicklung 3 umfassenden Resonanzkreises taktete, würden die fließenden Ströme lediglich durch die Streuinduktivitäten und Innenwiderstände der Bestandteile des Resonanzkreises begrenzt. Da diese Streuinduktivitäten und Innenwiderstände jedoch zwecks Erreichen eines hohen Wirkungsgrads des DC/DC-Wandlers in seinem Normalbetrieb möglichst klein sind, würden die Ströme so groß werden, dass sie zur thermischen Zerstörung der Schalter V1 und V2 führen würden, die als Halbleiterbauteile ausgebildet sind. Diese Gefahr ist umso größer, je höher der Spannungsunterschied zwischen dem eingangsseitigen Gleichspannungszwischenkreis 5 und dem ausgangsseitigen Gleichspannungszwischenkreis 16, d. h. zwischen der Eingangsspannung U_{E} und der Ausgangsspannung U_{A} ist. Um dieses Problem zu beherrschen, wird beim Aufstarten des DC/DC-Wandlers, also beim Starten seines Betriebs, bei dem der Gleichspannungszwischenkreis 16 zumindest noch nicht vollständig aufgeladen ist, die Pulsbreite beim gegenphasigen Takten der Schalter V1 und V2, die auch als duty cycle der Schalter V1 und V2 bezeichnet wird, zunächst stark reduziert. Auf diese Weise können die Ströme durch die Schalter V1 und V2 auf ein zulässiges Maß begrenzt werden, obwohl die Schalter V1 und V2 auch beim Aufstarten mit derselben Frequenz wie später im Normalbetrieb des DC/DC-Wandlers 1 getaktet werden. Mit diesen begrenzten Strömen wird der ausgangsseitige Gleichspannungszwischenkreis 16 aufgeladen, bis die an der Sekundärwicklung 4 wirksame Gegenspannung so groß ist, dass in den Normalbetrieb des DC/DC-Wandlers übergegangen werden kann. Bei diesem Aufstart werden die Schalter V1 und V2 jeweils mit einer festen vorgegebenen Pulsbreite getaktet, die stufenweise jeweils dann erhöht wird, wenn die Spannungsdifferenz zwischen den Gleichspannungszwischenkreisen 5 und 16, d. h. zwischen der Eingangsspannung U_{E} und der Ausgangsspannung U_{A} zu vorgegebenen Abfragezeitpunkten bestimmte Werte unterschreitet. Bei der Vorgabe der Grenzwerte für die Spannungsdifferenz ist das Windungsverhältnis zwischen der Primärwicklung 3 und der Sekundärwicklung 4 bzw. das daraus resultierende Umspannverhältnis des Hochfrequenztransformators 2 zu berücksichtigen. Hier beträgt dieses Verhältnis 7:5, d. h., eine Eingangsspannung U_{E} von 700 V wird im Normalbetrieb des DC/DC-Wandlers auf eine Ausgangsspannung U_{A} von 500 V reduziert. Die primäre Aufgabe des DC/DC-Wandlers ist jedoch die galvanische Entkopplung zwischen den Gleichspannungszwischenkreisen 5 und 16 mit möglichst kleinen Wickelkörpern und Verlusten. Die einzelnen Werte der Pulsbreite mit denen die Schalter V1 und V2 auf den einzelnen Stufen des Aufstartvorgangs gegenphasig getaktet werden, werden nicht nur nach dem Aspekt der Begrenzung des durch die Schalter V1 und V2 fließenden Stroms ausgewählt, sondern auch danach, dass mit diesen sehr kurzen Pulsbreiten keine Störungen in dem DC/DC-Wandler oder in diesen umgebender Elektronik induziert werden, was bei sehr kurzen Pulsen hohen Stroms leicht möglich ist. Darüber hinaus wird beim Aufstarten des DC/DC-Wandlers immer mit der kleinsten Pulsbreite zum Takten der Schalter V1 und V2 begonnen, weil die beiden Kapazitäten 9 zwar dazu vorgesehen sind, die Eingangsspannung U_{E} gleichmäßig aufzuteilen, dies aber aufgrund von Bauteiltoleranzen im unbelasteten Zustand des Gleichspannungszwischenkreises 5 nicht sichergestellt ist. Wenn eine Unsymmetrie der Spannungen über den Kapazitäten 9 vorliegt und dann die Schalter V1 und V2 getaktet werden, bildet sich entsprechend der Spannungsunsymmetrie eine "schiefe" Strombelastung der Schalter V1 und V2 aus. Dies bedeutet, dass einer der Schalter anfangs allein einen Strom von bis zum Doppelten des mittleren Ladestroms einer Schaltperiode führt, bis sich die Spannung über den Kapazitäten 9 symmetriert hat und sich die Ströme gleichmäßig auf die beiden Schalter V1 und V2 aufteilen. Dieser Effekt tritt unter Umständen auch dann auf, wenn die Ausgangsspannung U_{A} nicht bei null liegt, so dass eigentlich, vom Standpunkt der Spannungsdifferenz zwischen U_{E} und U_{A}, direkt mit der zweiten Stufe des Aufstartvorgangs, d. h. mit einer größeren Pulsbreite beim Takten der Schalter V1 und V2 begonnen werden könnte, was sich aus den genannten Gründen verbietet.

**Fig. 2** skizziert die stufenweise Aufladung des Gleichspannungszwischenkreises 16 beim Aufstarten des DC/DC-Wandlers 1. Dabei sind rechts die erreichten Werte der Ausgangsspannung U_{A} angegeben, wobei in Klammern darunter jeweils die Spannungswerte stehen, die diesen Ausgangsspannungen unter Berücksichtigung des Umspannverhältnisses des DC/DC-Wandlers von 7:5 entsprechen. Ganz oben ist die Eingangsspannung U_{E} angegeben. Die Stufen des Aufstartvorgangs sind über der Zeit aufgetragen. Links ist die Pulsbreite in Prozent angegeben, mit der die Schalter V1 und V2 gemäß Fig. 1 in den einzelnen Stufen 21 bis 23 getaktet werden. In der ersten Stufe 21 beträgt die Pulsbreite 1,4 %. Diese Stufe dauert typischerweise 500 ms und endet, wenn bei einer Abfrage nach 500 ms die Bedingung U_{E}-(7/5*U_{A}) > 340 V nicht mehr erfüllt ist, d. h., wenn die Spannungsdifferenz zwischen der Eingangsspannung und der umgerechneten Ausgangsspannung auf 340 V oder weniger abgefallen ist. Wenn dies nicht der Fall ist, wird die Stufe 21 um weitere 500 ms verlängert. Ist die Spannungsdifferenz auch nach 2 s noch größer als 340 V wird der Aufstartvorgang abgebrochen und ein Fehler ausgegeben. In der nächsten Stufe 22 wird die Pulsbreite auf hier 2,5 % erhöht. Diese Stufe dauert typischerweise 200 ms und endet, wenn bei einer Abfrage nach 200 ms die Bedingung U_{E}-(7/5*U_{A}) > 200 V nicht mehr erfüllt ist, d. h. die Spannungsdifferenz auf 200 V oder weniger abgefallen ist. Dann wird in einer dritten Stufe 23 die Pulsbreite auf 4 % erhöht, bis U_{E} = (7/5*U_{A}) gilt, d. h. die Spannungsdifferenz unter Berücksichtigung des Untersetzungsverhältnisses des DC/DC-Wandlers auf null abgefallen ist. Anschließend geht der DC/DC-Wandler in seinen Normalbetrieb über, bei dem die Schalter V1 und V2 hier mit einer Pulsbreite von jeweils 42 % getaktet werden. Da dies erst nach vollständigem Aufladen des ausgangsseitigen Gleichspannungszwischenkreises 16 gemäß Fig. 1 erfolgt, können übermäßige Ströme durch die Schalter V1 und V2 sicher vermieden werden. Wenn die Dämpfung des Resonanzkreises 20 gemäß Fig. 1 sehr klein ist, können die in Fig. 2 angegebenen Werte für die Pulsbreite in den Stufen 21 bis 23 schon zu groß sein, um den Strom durch die Schalter V1 und V2 während des Aufstartens des DC/DC-Wandlers 1 ausreichend zu begrenzen. Sie müssen dann beispielsweise auf einen Bereich von 0,5 bis 2 % reduziert werden. Überraschenderweise ist auch dies mit Halbleiterschaltern, insbesondere in Form von MOSFETs möglich, selbst wenn diese eigentlich für eine Pulsbreite nahe 50 % für den Normalbetrieb des DC/DC-Wandlers 1 optimiert sind, weil sich derartige MOSFET-Halbleiterschalter bei hohen fließenden Strömen, die es sicher abzuschalten gilt, besonders schnell schalten lassen.

### BEZUGSZEICHENLISTE

- 1: DC/DC-Wandler
- 2: Hochfrequenztransformator
- 3: Primärwicklung
- 4: Sekundärwicklung
- 5: Gleichspannungszwischenkreis
- 6: Diode
- 7: Wechselrichterbrücke
- 8: Brücke
- 9: Kapazität
- 10: Induktivität
- 11: Pufferkapazität
- 12: Eingangsleitung
- 13: Eingangsleitung
- 14: Diode
- 15: Gleichrichterbrücke
- 16: Gleichspannungszwischenkreis
- 17: Pufferkapazität
- 18: Ausgangsleitung
- 19: Ausgangsleitung
- 20: Resonanzkreis
- 21: Stufe
- 22: Stufe
- 23: Stufe
- 24: Normalbetrieb

## Patentansprüche

1. Verfahren zum Aufstarten eines DC/DC-Wandlers (1) mit Hochfrequenztransformator (2), dessen Primärwicklung (3) über eine getaktete Schalter (V1, V2) aufweisende Wechselrichterbrücke (7) aus einem eingangsseitigen Gleichspannungszwischenkreis (5) gespeist wird und dessen Sekundärwicklung (4) über eine Gleichrichterbrücke (15) einen ausgangsseitigen Gleichspannungszwischenkreis (16) lädt, wobei die Schalter (V1, V2) der Wechselrichterbrücke (7) beim Aufstarten zum Aufladen des ausgangsseitigen Gleichspannungszwischenkreises (16) in einer von ihrem Normalbetrieb (24) abweichenden Weise getaktet werden, um beim Aufstarten fließende Ströme zu begrenzen, **dadurch gekennzeichnet, dass** die Schalter (V1, V2) der Wechselrichterbrücke (7) beim Aufstarten mit einer stufenweise festen Pulsbreite von nicht mehr als 5 % getaktet werden.

2. Verfahren nach Anspruch 1, **dadurch gekennzeichnet, dass** die stufenweise feste Pulsbreite nicht mehr als 2 % beträgt.

3. Verfahren nach Anspruch 1 oder 2, **dadurch gekennzeichnet, dass** die stufenweise feste Pulsbreite von Stufe zu Stufe um vorzugsweise 50 bis 100 %, erhöht wird.

4. Verfahren nach einem der vorangehenden Ansprüche, **dadurch gekennzeichnet, dass** die Werte der stufenweise festen Pulsbreite aus solchen Werten der Pulsbreite ausgewählt werden, bei denen ein störungsfreier Betrieb des DC/DC-Wandlers gegeben ist.

5. Verfahren nach einem der vorangehenden Ansprüche, **dadurch gekennzeichnet, dass** die stufenweise feste Pulsbreite über zwei bis vier Stufen erhöht wird.

6. Verfahren nach einem der vorangehenden Ansprüche, **dadurch gekennzeichnet, dass** die Pulsbreite dann auf den Wert der nächsten Stufe erhöht wird, wenn eine Gleichspannungsdifferenz zwischen der Gleichspannung des eingangsseitigen Gleichspannungszwischenkreises (5) und der auf den eingangsseitigen Gleichspannungszwischenkreis (5) umgerechneten Gleichspannung des ausgangsseitigen Gleichspannungszwischenkreises (16) einen vorgegebenen Grenzwert einhält oder unterschreitet.

7. Verfahren nach einem der vorangehenden Ansprüche, **dadurch gekennzeichnet, dass** die Schalter (V1, V2) der Wechselrichterbrücke (7) beim Aufstarten mit derselben Frequenz wie im Normalbetrieb getaktet werden.

8. Verfahren nach einem der vorangehenden Ansprüche, **dadurch gekennzeichnet, dass** die Schalter (V1, V2) der Wechselrichterbrücke (7) mit einer festen Frequenz im Bereich von 16 bis 96 kHz getaktet werden.

9. Verfahren nach einem der vorangehenden Ansprüche, **dadurch gekennzeichnet, dass** die Pulsbreite, mit der die Schalter (V1, V2) der Wechselrichterbrücke (7) im Normalbetrieb (24) getaktet werden, fest ist und insbesondere in dem Bereich von mindestens 40 % bis <50 % liegt.

10. Verfahren nach einem der vorangehenden Ansprüche, **dadurch gekennzeichnet, dass** bei mehreren Stufen des Aufstartens immer mit dem kleinsten Wert der Pulsbreite begonnen wird.

11. DC/DC-Wandler (1) mit Hochfrequenztransformator (2), dessen Primärwicklung (3) über eine getaktete Schalter (V1, V2) aufweisende Wechselrichterbrücke (7) aus einem eingangsseitigen Gleichspannungszwischenkreis (5) gespeist wird und dessen Sekundärwicklung (4) über eine Gleichrichterbrücke (15) einen ausgangsseitigen Gleichspannungszwischenkreis (16) lädt, wobei eine Steuerung für das Takten der Schalter (V1, V2) der Wechselrichterbrücke (7) vorgesehen ist, die beim Aufstarten des DC/DC-Wandlers (1) zum Aufladen des ausgangsseitigen Gleichspannungszwischenkreises (16) die Schalter (V1, V2) der Wechselrichterbrücke (7) in einer von ihrem Normalbetrieb (24) abweichenden Weise taktet, um beim Aufstarten fließende Ströme zu begrenzen, **dadurch gekennzeichnet, dass** die Steuerung die Schalter (V1, V2) der Wechselrichterbrücke (7) beim Aufstarten mit einer stufenweise festen Pulsbreite von nicht mehr als 5 % taktet.

12. DC/DC-Wandler (1) nach Anspruch 11, **dadurch gekennzeichnet, dass** die Steuerung die Gleichspannung des eingangsseitigen Gleichspannungszwischenkreises (5) und die Gleichspannung des ausgangsseitigen Gleichspannungszwischenkreises (16) erfasst.

13. DC/DC-Wandler (1) nach Anspruch 11 oder 12, **dadurch gekennzeichnet, dass** die Primärseite des Hochfrequenztransformators (2) Teil eines Resonanzkreises (20) ist.

14. DC/DC-Wandler (1) nach Anspruch 13, **dadurch gekennzeichnet, dass** die Wechselrichterbrücke eine Halbbrücke mit zwei gegenphasig getakteten Schaltern V1 und V2 ist, wobei die Stromkommutierung über eine parallele Brücke (8) aus zwei Kapazitäten (9) erfolgt.

15. DC/DC-Wandler (1) nach Anspruch 13 oder 14, **dadurch gekennzeichnet, dass** die Steuerung die Schalter (V1, V2) während des Aufstartens und des Normalbetriebs (24) des DC/DC-Wandlers (1) mit derselben Frequenz taktet.
